# EUROPEAN PATENT APPLICATION

(11) **EP 0 853 392 A2**
(43) Date of publication of application: **15.07.1998**
(21) Application number: 97310144.7
(22) Date of filing: 16.12.1997
(51) Int. Cl.: H04B 7/26

(54) **Subcarrier frequency division multiplexing of modulated backscatter signals**

(30) Priority: 31.12.1996 US 777834
(71) Applicant: LUCENT TECHNOLOGIES INC., Murray Hill, New Jersey 07974-0636 (US)
(72) Inventor: MacLellan, John Austin, Freehold, New Jersey 07728 (US); Wright, Gregory Alan, Fair Haven, Monmouth, N.J. 07704 (US); Shober, Anthony R., Red Bank, New Jersey 07701 (US)
(74) Representative: Buckley, Christopher Simon Thirsk

(57) **Abstract**

A communication system comprises an Interrogator (103) and one or more Tags (105). The Interrogator (103) generates a modulated carrier signal by modulating a first information signal onto a radio signal. The Interrogator transmits a downlink signal which comprises the modulated carrier signal and the radio signal. A Tag (105) receives and processes the downlink signal. Specifically, the Tag demodulates the first information signal from the modulated carrier signal and generates a second information signal typically based on the contents of the first information signal. The second information signal is used to modulate a subcarrier signal, thereby generating a modulated subcarrier signal. A Backscatter Modulator using this modulated subcarrier signal modulates the reflection of the radio signal, wherein the reflected signal is an uplink signal. The Interrogator (103) receives and demodulates the uplink signal using homodyne detection to obtain the modulated subcarrier signal, which is then demodulated using a subcarrier demodulator to obtain the second information signal. In one embodiment, frequency of the subcarrier signal is an integer multiple of the second information signal symbol rate and is up to half the sampling rate of the subcarrier demodulator.

## Description

### Related Applications

Related subject matter is disclosed in the following applications filed concurrently herewith and assigned to the same Assignee hereof: U.S. patent applications "Shielding Technology In Modulated Backscatter System," Serial No. ; "Encryption for Modulated Backscatter Systems," Serial No. ; "QPSK Modulated Backscatter System," Serial No. ; "Modulated Backscatter Location System," Serial No. ; "Antenna Array In An RFID System," Serial No. ; "IQ Combiner Technology In Modulated Backscatter System," Serial No. ; "In-Building Personal Pager And Identifier," Serial No. ; "In-Building Modulated Backscatter System," Serial No. ; "Inexpensive Modulated Backscatter Reflector," Serial No. ; "Passenger, Baggage, And Cargo Reconciliation System," Serial No. . Related subject matter is also disclosed in the following applications assigned to the same assignee hereof: U.S. patent application 08/504188, entitled "Modulated Backscatter Communications System Having An Extended Range"; U.S. Patent Application Serial No 08/492,173, entitled "Dual Mode Modulated Backscatter System,"; U.S. Patent Application Serial No. 08/492,174, entitled "Full Duplex Modulated Backscatter System,"; and U.S. Patent Application Serial No. 08/571,004 entitled "Enhanced Uplink Modulated Backscatter System."

### Field of the Invention

This invention relates to wireless communication systems and, more particularly, to modulated backscatter communication systems.

### Background of the Invention

Radio Frequency Identification (RFID) systems are used for identification and/or tracking of equipment, inventory, or living things. RFID systems are radio communication systems that communicate between a radio transceiver, called an Interrogator, and a number of inexpensive devices called Tags. The objectives of RFID systems are to design a reliable and secure architecture, and to minimize the total cost of the Interrogator and the Tags, while meeting the system performance requirements. In RFID systems, the Interrogator communicates to the Tags using modulated radio signals, and the Tags respond with modulated radio signals. Specifically, the Interrogator transmits an amplitude modulated signal to the Tag, and then transmits a Continuous-Wave (CW) signal to the Tag. The Tag modulates the CW radio signal using Modulated BackScattering (MBS) where the antenna is electrically switched, by a Tag's modulating signal, from being a absorber of RF radiation to being a reflector RF radiation, thereby encoding a Tag's information onto the CW radio signal being reflected. The Interrogator demodulates the incoming CW modulated radio signal and decodes the Tag's information.

Prior art RFID systems utilize Interrogators that are associated with a single application. Where there are several applications, multiple Interrogators are needed, thereby increasing the cost of the RFID system. Accordingly, there exists a need for a RFID system operable to service multiple applications with the same Interrogator.

### Summary of the Invention

The present invention discloses a Radio Frequency Identification (RFID) system with an Interrogator operable to service multiple applications using Frequency Division Multiplexing (FDM). In one embodiment of the present invention, the RFID system comprises the Interrogator and one or more Tags. The Interrogator generates a first modulated signal by modulating a first inflation signal onto a radio signal. The Interrogator transmits a Downlink signal comprising of the fist modulated signal and a continuous wave (CW) radio signal. The Tag receives the Downlink signal and subsequently demodulates first information signal from the first modulated signal. Depending on the first information signal, the Tag generates a second information signal, wherein the second information signal is used to modulate a subcarrier signal and generate a modulated subcarrier signal. The Tag then modulates the reflection of the CW radio signal using the modulated subcarrier signal, thereby causing an Uplink or a second modulated signal to be transmitted from the Tag. The Interrogator receives the Uplink signal and subsequently demodulates the second information signal from the Uplink signal using homodyne detection.

In one embodiment, homodyne detection involves the use of the radio signal as the local oscillator source. In this embodiment, the Interrogator mixes the incoming second modulated signal with the local oscillator source producing both In-phase and Quadrature modulated subcarrier signals which are linearly combined and bandpass filtered at the frequency of the subcarrier signal. The resulting mixed and bandpass signal is then provided as input to a subcarrier demodulator, which is operable to demodulate the second information signal modulated onto any subcarrier frequency that is a integer multiple of the second information signal symbol rate and up to half the sampling rate of the subcarrier demodulator.

### Brief Description of the Drawing

The features, aspects, and advantages of the present invention will become better understood with regard to the following description, appended claims, and accompanying drawings where:
FIG. 1 shows a block diagram of a Radio Frequency Identification (RFID) system in accordance with one embodiment of the present invention;
FIG. 2 shows a block diagram of a illustrative Interrogator unit used in the RFID system of FIG. 1;
FIG. 3 shows a block diagram of an illustrative Tag unit used in the RFID system of FIG. 1;
FIG. 4 shows a logic diagram of a Gate Array differential encoded binary phase shift keying (DBPSK) receiver in accordance with one embodiment of the present invention;
FIG. 5 shows a logic diagram of a Gate Array differential encoded quadrature phase shift keying (DQPSK) receiver in accordance with one embodiment of the present invention; and
FIG. 6 shows a block diagram of a portion of a Frequency Division Multiplexing Modulated BackScatter Interrogator.

### Detailed Description

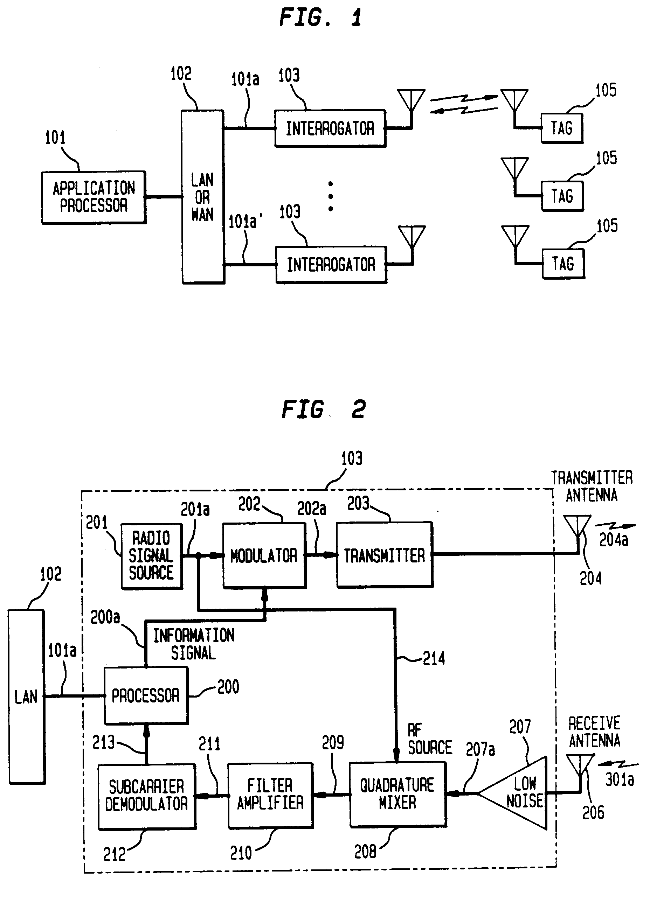

Referring to FIG. 1, there is shown an overall block diagram of a Radio Frequency Identification (RFID) system in accordance with one embodiment of the present invention. As shown in FIG.1, an Application Processor 101 communicates over a Local Area Network (LAN) OR Wide Area Network (WAN) 102 to a plurality of Interrogators 103 which, in turn, communicate with one or more Tags 105. Referring to FIG. 2, there is shown a block diagram of a illustrative Interrogator 103 As shown in FIG. 2, a processor 200 receives an Information Signal 101a from the LAN 102. The processor 200 subsequently formats the Information Signal 101a into an information Signal 200a. A Modulator 202 modulates the Information Signal 200a onto a Radio Signal 201a (also referred to herein as a "carrier signal") generated by a Radio Signal Source 201, thereby creating a First Modulated Signal 202a (also referred to herein as a "Modulated Carrier Signal") which is then transmitted by a Transmitter 203 via Antenna 204. Upon transmission of the First Modulated Signal 202a, the Interrogator 103 then transmits a continuous wave (CW) radio signal. Transmission from the Interrogator is referred to herein as a Downlink. Thus, the transmitted First Modulated Signal and CW radio signal constitutes a Downlink Signal 204a.

In one embodiment, the First Modulated Signal 202a is transmitted using amplitude modulation. In this embodiment, amplitude modulation is chosen because amplitude modulated signals can be demodulated by the Tag with a single inexpensive nonlinear device such as a diode.

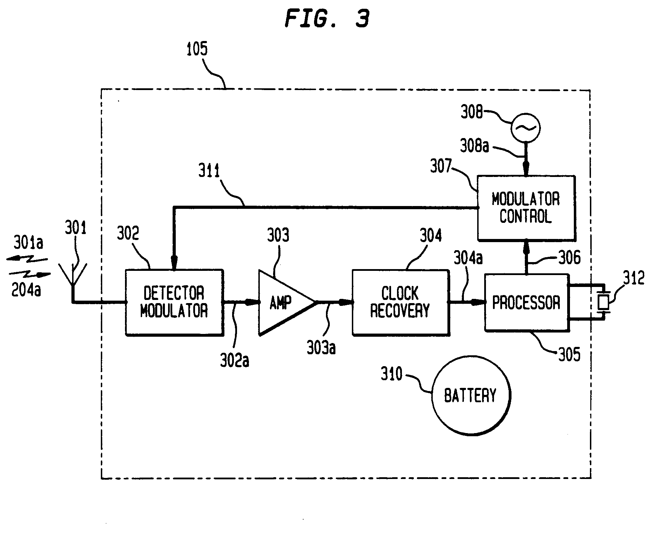

Referring to FIG. 3, there is shown a block diagram of an illustrative Tag 105. As shown in FIG. 3, the Tag 105 includes an Antenna 301, such as a loop or patch antenna, for receiving the Downlink Signal 204a transmitted by the Interrogator 103. The First Modulated Signal of the Downlink Signal 204a is demodulated, directly to baseband, using a Detector/Modulator 302 that is, the resulting demodulated signal 302a is essentially the Information Signal 200a. In one embodiment, the Detector/Modulator 302 is a microwave diode, such as the well-known Schottky diode. To minimize signal loss of the First Modulated Signal, the Detector/Modulator 302 should be appropriately biased with the proper current level in order to match the impedance of the Antenna 301 to the Detector/Modulator 302.

The Demodulated Signal 302a is then amplified by an Amplifier 303 and synchronization recovered in a Clock ad Frame Recovery Circuit 304. The resulting Recovered Signal 304a is sent to a Processor 305, where the Recovered Signal 304a is analyzed -- that is, the Processor 305 examines the content of the Information Signal 200a. Note that the Processor 312 includes a crystal oscillator 312 for providing timing information. In one embodiment, the Processor 305 is typically an inexpensive 4- or 8-bit microprocessor, and the Clock and Frame Recovery Circuit 304 is implemented in an ASIC (Applied Specific Integrated Circuit) which cooperates with the Processor 305. For purposes of this application, the term processor includes, but is not limited to, processors, micro- processors, and ASICs.

Depending on the content of the information Signal 200a, the Processor 305 then generates another Information Signal 306 to be sent from the Tag 105 back to the Interrogator 103. The Information Signal 306 is provided as input to a Modulator Control Circuit 307, which uses the Information Signal 306 to modulate a Subcarrier Signal 308a generated by a Frequency Source 308. In one embodiment, the Frequency Source 308 is derived from the crystal oscillator 312, or is a crystal oscillator separate from the Processor 305. In another embodiment, the frequency source is derived from signals present inside the Processor 305 -- such as a divisor of the primary clock frequency of the Processor.

The Modulated Control Circuit 307 outputs a Modulated Subcarrier Signal 311, which is used by the Detector/Modulator 302 to modulate the CW radio signal of the Downlink Signal 202a, thereby producing a Modulated Backscatter (e.g., reflected) Signal 301a. Note that transmission from the Tag to the Interrogator is referred to herein as an Uplink. Thus, the Modulated Backscatter Signal constitutes an Uplink Signal.

In one embodiment, the presence of the Modulated Subcarrier Signal 311 (or lack thereof) causes the Detector/Modulator 302, e.g., Schottky diode, to change the reflectance, i.e., impedance, of the Antenna 301-- for example, the impedance of the antenna is changed from zero to infinity.

Power is provided to the circuitry of the Tag by a power source 310. For purposes of this application, the term "power source" includes, but is not limited to, batteries and devices operable to transform microwave or magnetic energy into electrical energy, such as a power rectifier or an inductive coupling.

### Modulation

Them are a variety of techniques for using MBS to send information from the Tag 105 to the Interrogator 103. In one embodiment, the Modulator Control Circuit 307 of the Tag generates an amplitude modulated signal 311 modulated at a frequency f₂ corresponding to the Information Signal 306. If the Radio Signal Source 201 generates a CW radio signal 201a with a frequency f_{c}, then the second modulated signal, i.e., Modulated Backscatter Signal 301a, will have a frequency f_{c} with a bandwidth of 2f₂. Signals outside of this bandwidth range can be filtered by the Interrogator. This approach could be termed the "MBS at baseband" approach. In an alternate embodiment, the Frequency Source 308 generates a Subcarrier Signal 308a with a frequency fₛ and the Information Signal 306 (frequency f₂) is modulated onto the Subcarrier Signal 308a (frequency fₛ) using AM, Frequency Shift Keying (FSK) or M-order Phase Shift Keying (PSK) modulation. Accordingly, the Modulated Backscatter Signal 301a has a frequency f_{c} (corresponding to the CW radio frequency) with a bandwidth of 2f₂, but at a frequency fₛ away from f_{c}. This method is termed "MBS of a subcarrier".

### Receiver

Referring back to FIG. 2, the Interrogator 103 receives the Uplink Signal 301a with a Receive Antenna 206, amplifies the Uplink Signal 301a with a Low Noise Amplifier 207, thereby obtaining an Amplified Signal 207a. The Amplified Signal 207a is provided as input to a Mixer 208, which uses homodyne detection to demodulate the Amplified Signal 207a down to the intermediate frequency (IF) corresponding to the subcarrier signal 308a (frequency fₛ) -- that is, the Radio Signal 201a is used to demodulate the Amplified Signal 207a to obtain a Demodulated Signal 209, which is essentially the Modulated Subcarrier Signal 311. Note that such homodyne detection has advantages in that it greatly reduces phase noise in the receiver circuits.

Subsequently, the Mixer 208 sends the Demodulated Signal 209 into a Filter/Amplifier 210 where the Demodulated Signal 209 is filtered . The resulting Filtered Signal 211 is then demodulated in a Subcarrier Demodulator 212 to obtain an Information Signal 213, which is essentially the Information Signal 306. The Information Signal 213 is provided as input to a Processor 200 to determine the content of the Information Signal 213. Note that if the Mixer 208 is a Quadrature Mixer, the Mixer 208 will send both I (in phase) and Q (quadrature) signals. In such a case, the I and Q channels of Demodulated Signal 209 can be combined in the Filter/Amplifier 210, in the Subcarrier Demodulator 212, or in the Processor 200.

In an alternate embodiment of the present invention, the Interrogator includes a single antenna for transmitting and receiving radio signals. In this embodiment, an electronic method of separating the transmitted signal from that received by the receiver chain is needed. This could be accomplished by a device such as a Circulator, which is well-known in the art.

The present invention includes several implementations of the Subcarrier Demodulator 212. These implementations include, but are not limited to, conventional analog I/Q demodulation of the subcarrier signal using, e.g., a Costas Loop, Digital Signal Processing (DSP) of the sampled subcarrier, or implementing a receiver in digital logic. Since minimizing the system cost is one objective, one embodiment of the present invention implements the Subcarrier Demodulator in digital logic.

### Demodulation

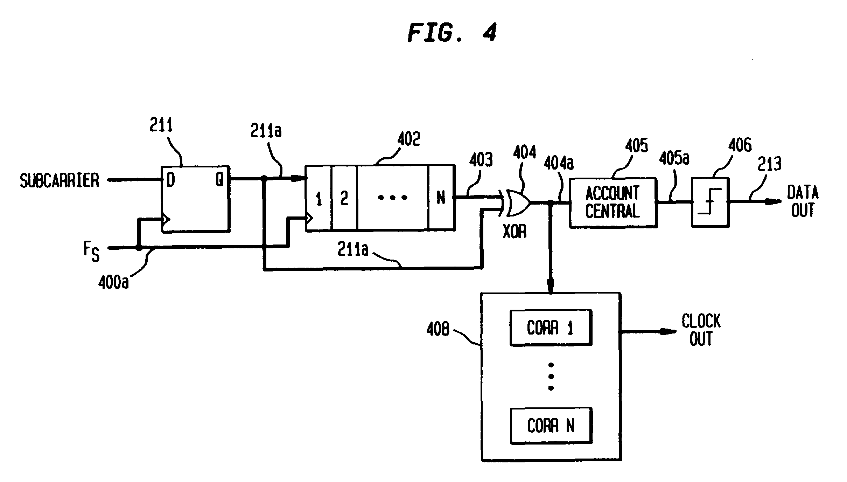

In one embodiment of the present invention, the Subcarrier Demodulator 212 is operable to demodulate signals modulate using Differential Binary Phase Shifted Keyed (DBPSK). Referring to Fig. 4, there is shown a logic diagram of such a Subcarrier Demodulator 212 using a Gate Array circuit to demodulate differentially encoded binary phase shift keyed data and to derive the received bit clock from the demodulated data stream.

The input to the Subcarrier Demodulator 212 is the Filtered Signal 211, which in this embodiment is essentially a subcarrier signal modulated by differentially encoded BPSK. The Filtered Signal 211 is sampled at frequency rate Fₛ and hard limited by a D Flip-Flop Circuit 401. Sample signals 211a are provided as input to an N stage shift register 402 being clocked at the sampling rate Fₛ, where the N^{th} stage provides a one symbol delay. The Sampled Signals 211a are multiplied by Delayed Sampled Signals 403 using an exclusive-OR gate 404. The resulting Demodulated Signal 404a is filtered by an Accumulator Circuit 405 which, in one embodiment, is a digital equivalent to the well-known integrate and dump (Matched Filter) receiver. The output signal 405a of the Accumulator 405 is passed to a Symbol Decision Comparator 406 to obtain the Information Signal 213.

Note that this embodiment of the Subcarrier Demodulator 212 supports Frequency Division Multiplexing (FDM). Specifically, the Subcarrier Demodulator 212 of Fig. 4 can demodulate any subcarrier signal 308a with a frequency fₛ that was BPSK modulated with an Information Signal 306 having a symbol rate of f₂, wherein the subcarrier frequency fₛ has a maximum value of (Fₛ/2) and the subcarrier frequency fₛ is an integer multiple of the Information Signal 306 symbol rate f₂. Note that for DBPSK modulated subcarrier signals, the Information Symbol 306 symbol rate is equal to the Information Signal 306 data rate. For example, assume an information data 306 rate of 100 Kbps and a sample frequency Fₛ of 4 MHz. Then, the same Subcarrier Demodulator 212 hardware could be used to demodulate any differentially encoded BPSK signal at any of the following subcarrier frequencies: 100 kHz, 200 kHz, 300 kHz, ... , 1.9 MHz, 2 MHz. This feature supports frequency division multiplexing, as will be discussed herein.

After the Filtered Signal 211 has been demodulated, the data clock can be generate. In one embodiment the subcarrier demodulator 212 implements a Maximum A Posteriori (MAP) bit timing circuit to generate a data clock. In this embodiment, the Demodulated Signal 404a is also sent to a bank of Correlators 408, each of which is testing a different clock phase. The Correlators 408 measure the alignment of the input data 404a with their clocks over a B bit window. In one embodiment, each correlator is made from an integrate-and-dump filter, a weighting function that gives higher weight to high signal-to-noise data, and an accumulator. After B bits have been examined, the correlator with the highest accumulator value is found and its associated clock phase is used to sample the next B bits of data. The accumulator is then reset, and the next B bits are examined. The important thing here is that there is no memory from one set of bits to the next; the clock estimation circuit, every B bits, generate a new estimate of the best clock phase independent of the previous estimates. This lets us acquire a bit clock quickly, thereby providing a clock even for modest signal-to-noise ratio (SNR).

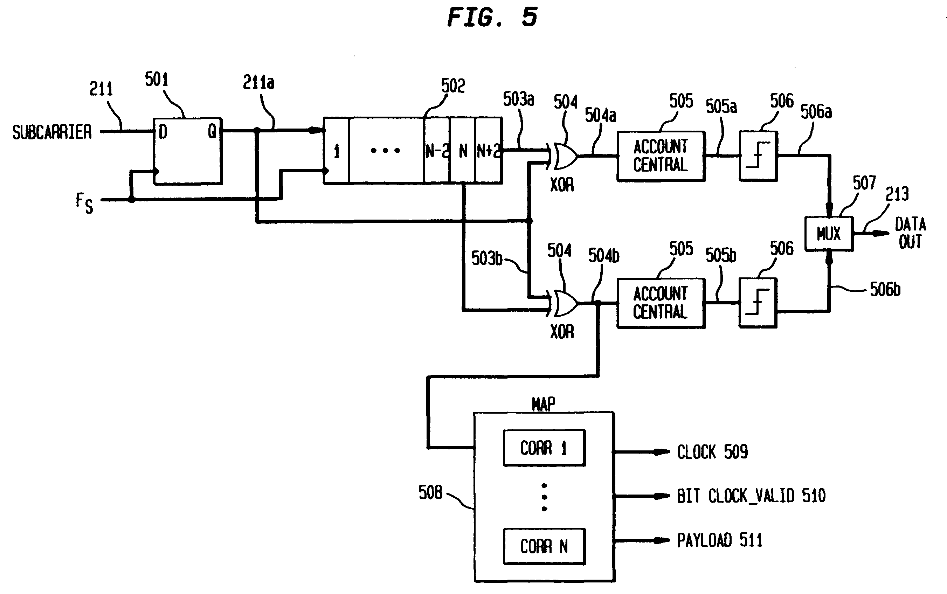

In another embodiment of the present invention, the Subcarrier Demodulator 212 is operable to demodulate signals modulated using Differential Quadrature Phase Shift Keying (DQPSK). Referring to FIG. 5, there is shown a logic diagram of such a Subcarrier Demodulator 212. As shown in FIG. 5, the sampled signals 211a are provided as input to a N+2 stage shift register 502, where the N^{th} stage provides a one symbol delay. The N+2 and N-2 stages are designed to advance the sampled DQPSK modulated signal 211a by 45° and -45° relative to the subcarrier signal, thereby creating delayed signals 503a,b, respectively. The sampled signals 211 are multiplied by each of the delayed subcarriers 503a and 503b using exclusive-OR gates 504. The resulting Demodulated Signals 504a,b are filtered by Accumulator Circuits 505. The output of the accumulator circuits 505, i.e., signals 505a,b, are passed to Symbol Decision Comparators 506. The resulting signals 506a,b are the I and Q information symbols bits, which are multiplexed or interleaved by a Multiplexer 507 to obtain the Information Signal 213.

Note that the DQPSK subcarrier demodulator 212 shown in FIG. 5 has the same property as the DBPSK subcarrier demodulator 212 shown in FIG. 4 in that the same DSPSK Subcarrier Demodulator hardware can demodulate different subcarrier frequencies, in the same manner as above. Thus, extensions to higher order M-order DPSK modulation schemes are apparent. Note that, for DQPSK, the Information Signal 306 symbol rate is equal to half the Information Signal 306 data rate.

### Frequency Division Multiplexing

As mentioned earlier, the Subcarrier Demodulator 212 of the present invention can demodulate any modulated subcarrier signal with a frequency that is an integer multiple of the information signal 306 symbol rate fₛ and up to half the sampling frequency Fₛ. Therefore, it is possible to use Frequency Division Multiplexing (FDM) techniques to separate several tags that are within an Interrogator's reading field, i.e., area of space within which the Tag and the Interrogator can communicate, or use the same Interrogator for different applications, wherein the different applications are distinguishable by their subcarrier frequency.

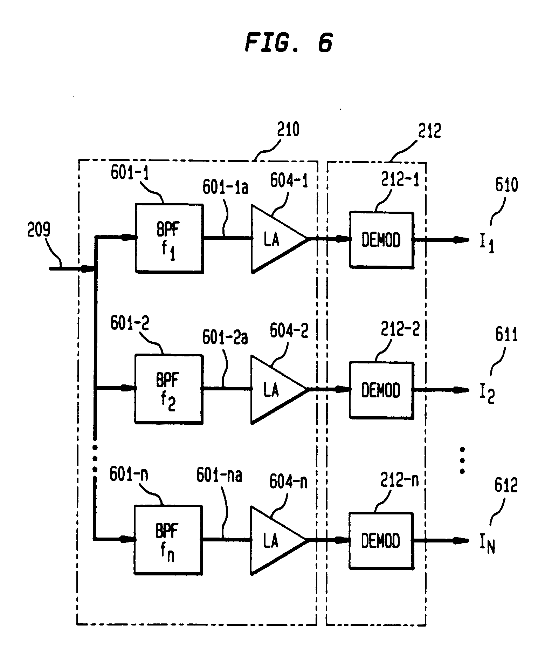

Referring to FIG. 6, there is shown one embodiment of a portion of the Interrogator that is operable to support Frequency Division Multiplexing. In this embodiment, the Interrogator uses the same local oscillator frequency source, e.g., Radio Signal Source, and first stage RF circuitry for Uplink signals with different subcarrier frequencies. As shown in FIG. 6, the Filter/Amplifier 210 comprises Bandpass Filters 601-1,...,n and Limiting Amplifiers 604-1,...,n, and the Subcarrier Demodulator 212 comprises a series of Subcarrier Demodulators 212-1,...,n. The output of the first stage RF circuit is provided as input to the Bandpass Filters 601-1,...,n, wherein each bandpass filter processes signals at (illustratively three) different subcarrier frequencies. The output signals 601-1a,...,na of each bandpass filter are provided as input, via the Limiting Amplifiers 604-1,...,n, to separate Subcarrier Demodulators 212-1,...,n, wherein each Subcarrier Demodulator 212-1,...,n demodulates signals at different subcarrier frequencies. If each application uses a different subcarrier frequency, which is an integer multiple of the baseband information signal frequency f₂ and up to half the sampling Fₛ, many applications can share a common Interrogator thereby decreasing the cost of an RFID system -- that is, the same Interrogator is capable of receiving and demodulating multiple information signals carried on different subcarriers simultaneously.

Note that the Tag 105 can also be designed to synthesize multiple subcarrier signals -- that is, the same Tag 103 can generate Uplink signals with different subcarrier frequencies. Referring back to FIG. 3, the Modulator Control 307 can be designed to generate modulated subcarrier signals 311 with different frequencies using divider circuits under the control of the Processor 305. In one embodiment, the Processor 303 could be instructed which of several potential frequencies of subcarrier signals to use based upon the Information Signal 200a. Thus, the Interrogator 103 could instruct the Tag 103 which subcarrier frequency to use for the future Uplink signals.

What has been described is merely illustrative of the application of the principles of the present invention. Other arrangements and methods can be implemented by those skilled in the art without departing from the spirit and scope of the present invention

## Claims

**1.** A communication system comprising:
an antenna for receiving a downlink signal and reflecting an uplink signal, the downlink signal having a modulated carrier signal and a radio signal;
a detector modulator for demodulating a first information signal from the modulated carrier signal and for generating the uplink signal by modulated backscattering a modulated subcarrier signal onto the radio signal, the detector modulator being operable to change reflectance of the antenna;
a processor for examining the first information signal and generating a second information signal;
a frequency source for generating a subcarrier signal; and
a modulator for generating the modulated subcarrier signal by modulating the second information signal onto the subcarrier signal.

**2.** The communication system of claim 1, wherein the frequency source generates a subcarrier signal with a frequency *f*_{*S*} equal to an integer multiple of a symbol rate *f*₂ of the second information signal up to one half a sampling rate *F*_{*S*} of the modulated subcarrier signal.

**3.** The communication system of claim 1, wherein the frequency source is operable to generate another subcarrier signal with a frequency different than the frequency of the first subcarrier signal.

**4.** The communication system of claim 1 further comprising:
an interrogator for receiving and processing the uplink signal.

**5.** The radio communication system of claim 4, wherein the interrogator includes:
a receive antenna for receiving the uplink signal;
a second frequency source for generating the radio signal;
a mixer for mixing the uplink signal down to the frequency of the subcarrier signal using the second frequency source; and
a subcarrier demodulator for demoulating the mixed down uplink signal to obtain the second information signal.

**6.** The communication system of claim 5, wherein the interrogator further includes:
a plurality of filters for bandpass filtering within predetermined bandwidths the mixed down uplink signal; and
a plurality of limiting amplifiers for amplifying the mixed down uplink signal.

**7.** A communication system comprising:
an antenna for receiving a downlink having a modulated carrier signal and a radio signal;
a detector for demodulating a first information signal from the modulated carrier signal;
a processor for examining the first information signal and generating a second information signal;
a frequency source for generating a subcarrier signal; and
one or more modulators for generating a modulated subcarrier signal by modulating the second information signal onto the subcarrier signal and for generating the uplink signal by modulated backscattering the modulated subcarrier signal onto the radio signal.

**9.** A communication system comprising:
an antenna for receiving an uplink signal, wherein the uplink signal includes a radio signal modulated by a modulated subcarrier signal, the modulated subcarrier including a subcarrier signal modulated by an information signal;
a radio signal source for generating a radio signal;
a mixer for mixing down the uplink signal using the radio signal generated by the radio signal source to obtain the modulated subcarrier signal; and
a subcarrier demodulator for demodulating the modulated subcarrier signal to obtain the subcarrier signal.

**10.** The communication system of claim 9, wherein the subcarrier demodulator is operable to demodulate modulated subcarrier signals with a frequency *f*_{*S*} equal to an integer multiple of a symbol rate *f*₂ of the information signal up to half a sampling rate *F*_{*S*} of the modulated subcarrier signals, thereby obtaining the information signal.
